# EUROPEAN PATENT SPECIFICATION

(11) **EP 2 460 747 B1**
(45) Date of publication and mention of the grant of the patent: **29.05.2013**
(21) Application number: 11188610.7
(22) Date of filing: 10.11.2011
(51) Int. Cl.: B65G 29/02, B65G 47/24, B65G 47/84

(54) **Apparatus and method for feeding bottles to a filling station**
Vorrichtung und Verfahren zum Zuführen von Flaschen zu einer Füllstation
Dispositif et procédé d'alimentation d'une poste de remplissage en bouteilles

(30) Priority: 03.12.2010 IT TO20100965
(43) Date of publication of application: 06.06.2012
(73) Proprietor: Fameccanica. Data S.p.A., 65129 Pescara (IT)
(72) Inventor: Di Donna, Mario, I-83031 Ariano Irpino (Avellino) (IT)
(74) Representative: Marchitelli, Mauro

(56) References cited:
- FR-A1- 2 499 952
- US-A- 2 195 625
- US-A- 5 421 447

## Description

The present invention regards an apparatus and a method for feeding bottles to a filling station.

The invention has been developed in particular for feeding bottles made of plastic material, which are to be filled with viscous liquids, such as, for example, detergents, washing liquids, etc. The invention can, however, be applied in general to any sector in which there is the need to feed a continuous flow of bottles to a filling station.

### Description of the prior art

In general, the bottles must be oriented in the vertical direction in order to be filled. The processes commonly used for filling bottles envisage that the bottles are first set in the vertical direction and then sent on to a buffer system that ensures a constant supply to the filling station. Feeding the bottles to the filling station is usually obtained by means of an auger system that sets the bottles at a distance apart from one another with a constant pitch.

In the prior art, the bottles are stored in the buffer system and set at a pitch apart whilst they are oriented in the vertical direction. The drawback of this technique is that the vertical position of the bottles is far from stable. In feeding systems of a known type, to overcome the problems of low stability of the bottles in the vertical position it is necessary to resort to complex lateral and vertical guide systems. These guide systems entail long setting-up times when it is necessary to pass from one bottle format to another. Moreover, the low stability of the bottles in the vertical position leads to frequent jamming in the buffer system and in the pitching system, with the result of a reduction in the efficiency and availability of the machine.

Also known solutions are that envisage an accumulation of the bottles oriented horizontally and that envisage robotized systems for setting the bottles with a vertical orientation. Said systems in any case require a subsequent pitching of the bottles oriented in the vertical direction prior to entry of the bottles into the filling station.

US-A-2195625 discloses an apparatus comprising the features of the preamble of claim 1.

### Object and summary of the invention

The object of the present invention is to provide an apparatus and a method for feeding bottles that will enable the problems of the known art to be overcome.

According to the present invention, said object is achieved by an apparatus and a method that have the characteristics forming the subject of Claims 1 and 3.

The claims form an integral part of the teaching provided in relation to the invention.

### Brief description of the drawings

The present invention will now be described in detail with reference to the annexed drawings, which are provided purely by way of non-limiting example and in which:
- Figure 1 is a schematic side view of an apparatus according to the present invention; and
- Figure 2 is a schematic perspective view of the part indicated by the arrow II in Figure 1.

### Description of a preferred embodiment

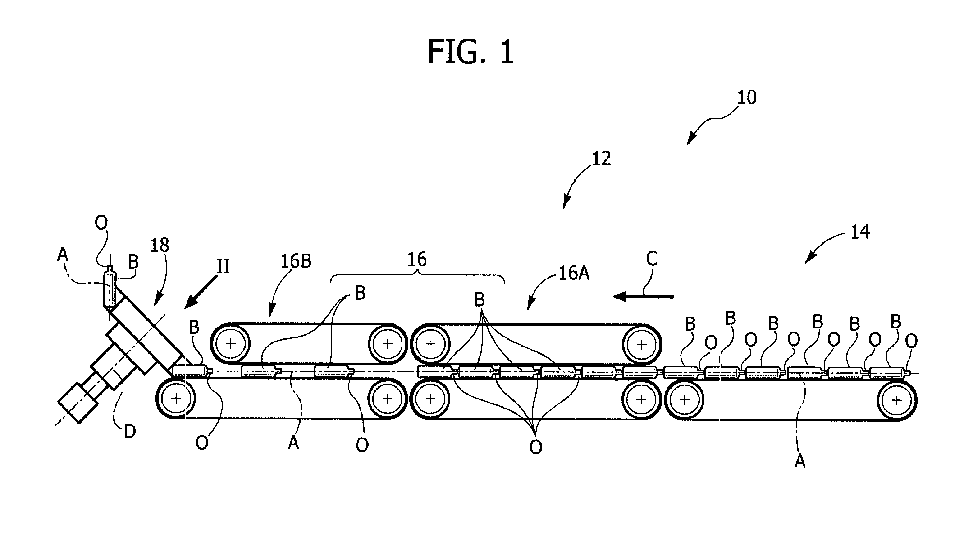

with reference to Figure 1, designated as a whole by 10 is an apparatus for feeding bottles B to a filling station (not illustrated). The bottles B have respective filling openings O and respective longitudinal axes A orthogonal to the filling openings O.

The apparatus 10 comprises a conveyor 12 including a buffer 14 and a conveyor 16 for phasing and spacing bottles B, which is set in series to the buffer 14.

The conveyor 12 receives the bottles B set with the respective axes A oriented horizontally and with the filling openings O oriented in a mutually concordant way.

The bottles B are arranged with this orientation prior to entry into the conveyor 12 by orientation systems of a known type. The conveyor 12 causes the bottles B to advance in a direction of feed C, with the bottles arranged with their respective axes A aligned with one another and set horizontally. In the example illustrated, the bottles B are oriented with the respective filling openings O facing the opposite way with respect to the direction of feed C. In the conveyor 12, the bottles B maintain their initial orientation, i.e., with the filling openings O opposite to the direction of feed C in the embodiment illustrated in the figures.

The conveyor 12 is schematically represented as being made up of various sections of belt conveyors. The constructional characteristics of the conveyor 12 are well known in the sector and do not require any indepth description.

The buffer 14 receives a flow of bottles B at a non-regular rate and has the purpose of generating downstream a continuous flow at a constant rate, compensating for the variability in the number of bottles per minute that it receives from the feed upstream.

The phasing-and-spacing conveyor 16 comprises two sections 16A and 16B in series with one another. Each section 16A, 16B is preferably formed by a bottom belt conveyor and a top belt conveyor in phase with one another with mutually facing branches that contact the bottles B on opposite sides. The first section 16A receives a continuous flow of bottles B from the buffer 14 and supplies the bottles B to the second section 16B in a cadenced way. In the second section 16B, the bottles B are set at a distance apart from one another by a constant pitch in the direction of feed C.

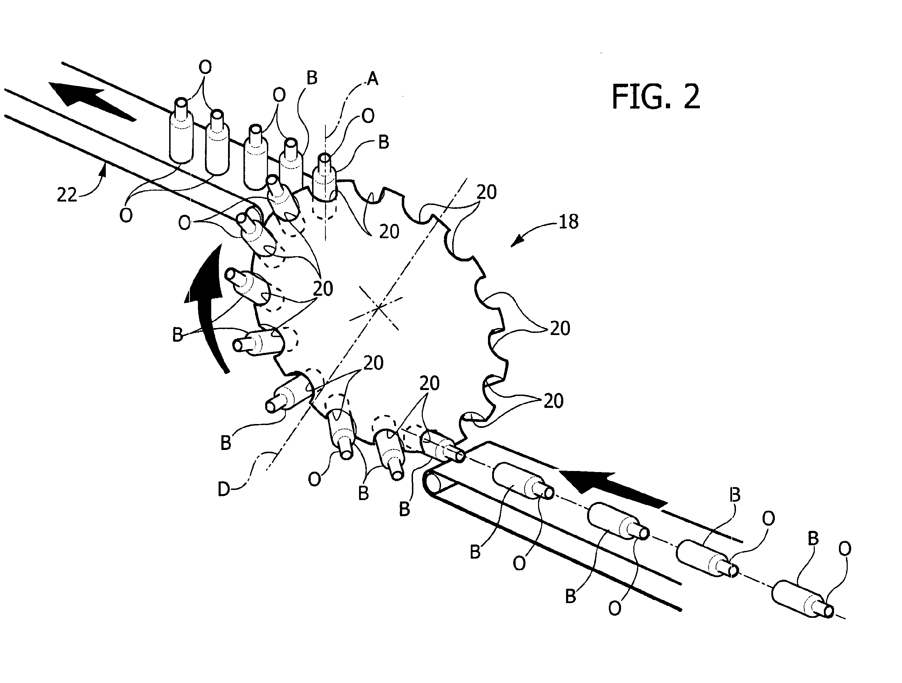

The apparatus 10 comprises a transfer wheel 18, which is able to turn about an axis D inclined with respect to the direction of feed C. The axis of rotation D of the wheel 18 is preferably inclined substantially at 45° with respect to the direction of feed C. With reference to Figure 2, the wheel 18 is provided, on its periphery, with a plurality of seats 20 designed to pick up and withhold the respective bottles B preferably by suction means.

The wheel 18 and the section 16B of the conveyor 12 are controlled in phase with one another in such a way that each seat 20 of the wheel 18 will receive a respective bottle B.

The wheel 18 picks up the bottles B set horizontally and at a distance apart from one another from the section 16B of the conveyor 12 and releases the bottles after rotation through approximately 180°. The wheel 18 releases the bottles B with the respective axes A oriented vertically and with the filling openings D facing upwards. The wheel 18 releases the bottles B to an output conveyor 22. In Figure 2, the output conveyor is schematically represented as a belt conveyor. In practice, the output conveyor may be made up of a series of wheels with a star-shaped profile designed to transfer the bottles B to a filling station in a cadenced way.

On the output conveyor 22, the bottles B are set at a distance apart from one another by a constant pitch. The pitch between the bottles B on the output conveyor 22 is equal to the pitch with which the bottles B are to be supplied to the filling station. The wheel 18 hence enables the bottles B to be set in the vertical position and automatically defines the pitch between the bottles on the output conveyor 22 in such a way that the bottles oriented vertically can be supplied to the filling station without any need for a subsequent repitching prior to entry into the filling station.

The solution according to the present invention is particularly advantageous in that it enables accumulation of the bottles B arranged horizontally. In this position, the bottles are much more stable, and this leads to a reduction in the number of machine jams and stoppages due to their instability.

The system according to the present invention carries out cadencing and pitching of the bottles in the condition of maximum stability of the bottles themselves. A particularly important characteristic of the present invention is that in the pitching system according to the present invention, for families of bottles that have the same width (or thickness/height when they are laid in the horizontal position), it is possible to carry out the change of format of the bottles merely via software, modifying the speed ratios of the conveyor 12 and of the wheel 18, without any need for modifications on the mechanisms and devices for change of format.

Downstream of the wheel 18, the bottles B are already in phase with the processes downstream (filling, topping, etc.), and it is no longer necessary to modify the pitch between the bottles after their vertical arrangement.

In a variant, it is also possible to feed the bottles B with the filling openings oriented forwards. In this case, the axis of rotation D of the transfer wheel 18 will be inclined in a direction opposite to what is illustrated for arranging the bottles vertically and with the openings O upwards.

Of course, without prejudice to the principle of the invention, the details of construction and the embodiments may vary widely, without thereby departing from the scope of the invention as defined by the ensuing claims.

## Claims

1. An apparatus for feeding bottles (B) to a filling station, wherein said bottles (B) have respective filling openings (O) and a longitudinal axis (A) orthogonal to said filling openings (O), said apparatus comprising:
- a conveyor (12) provided for feeding the bottles (B) in a direction of feed (C) so that they are arranged with their longitudinal axis (A) horizontal and with the filling openings (O) oriented in a mutually concordant way; and
- a transfer wheel (18), which is able to turn about an axis (D) inclined with respect to said direction of feed (C) and is provided with a plurality of gripping seats (20) designed to pick up from said conveyor (12) the bottles (B) arranged with said axis (A) horizontal and to release the bottles (B) with said axis (A) oriented in the vertical direction,
said apparatus being **characterized in that** said conveyor (12) is adapted to feed said bottles (B) with their longitudinal axes (A) in the direction of feed (C) and comprises a buffer (14) and a phasing-and-spacing conveyor (16) designed to feed the bottles (B) set at a distance apart from one another by a constant pitch in said direction of feed (C) and in a phase relation with said transfer wheel (18).

2. The apparatus according to Claim 1, **characterized in that** the axis of rotation (D) of said wheel (18) is inclined substantially at 45° with respect to said direction of feed (C).

3. A method for feeding bottles (B) to a filling station, wherein said bottles have respective filling openings (O) and respective longitudinal axes (A) orthogonal to said filling openings (O), the method comprising the steps of:
- feeding said bottles (B) with their longitudinal axes (A) in a direction of feed (C) so that they are arranged with said longitudinal axis (A) horizontal and with the filling openings (O) oriented in a mutually concordant way;
- picking up said bottles (B) by means of a transfer wheel (18), which is able to turn about an axis (D) inclined with respect to said direction of feed (C), said transfer wheel (18) being designed to pick up the bottles (B) with said axis (A) horizontal and to release the bottles (B) with said axis (A) oriented in the vertical direction, and
- setting said bottles (B) supplied to said transfer wheel at a distance apart from one another in said direction of feed (C) by a constant pitch and arranged in a phase relation with said transfer wheel (18).

## Patentansprüche

1. Eine Vorrichtung zum Zuführen von Flaschen (B) zu einer Füllstation, wobei die Flaschen (B) jeweilige Füllöffnungen (O) und eine longitudinale Achse (A) orthogonal zu den Füllöffnungen (O) haben, wobei die Vorrichtung aufweist:
- einen Förderer (12) bereitgestellt zum Zuführen der Flaschen (B) in einer Zuführrichtung (C), so dass sie mit ihrer longitudinalen Achse (A) horizontal und mit den Füllöffnungen (O) in wechselseitig gleichsinniger Art angeordnet sind; und
- ein Transferrad (18), welches in der Lage ist, sich um eine Achse (D) zu drehen, die bezüglich der Zuführrichtung (C) geneigt ist und mit einer Mehrzahl von Greifaufnahmen (20) versehen ist, eingerichtet zum Aufnehmen der Flaschen (B) von dem Förderer (12), die mit der Achse (A) horizontal angeordnet sind, und zum Freigeben der Flaschen (B), die mit der Achse (A) in der vertikalen Richtung orientiert sind,
wobei die Vorrichtung **dadurch gekennzeichnet ist, dass** der Förderer (12) eingerichtet ist zum Zuführen der Flaschen (B) mit ihren longitudinalen Achsen (A) in der Zuführrichtung (C), und einen Puffer (14) aufweist, und einen Phasen- und Beabstandungsförderer (16), der zum Zuführen der Flaschen (B) eingerichtet ist, die bei einem Abstand voneinander bei einem konstanten Pitch in der Zuführrichtung (C), und in einer Phasenbeziehung mit dem Transferrad (18) gesetzt sind.

2. Die Vorrichtung gemäß Anspruch 1, **dadurch gekennzeichnet, dass** die Rotationsachse (D) von dem Rad (18) im Wesentlichen um 45° bezüglich der Zuführrichtung (C) geneigt ist.

3. Ein Verfahren zum Zuführen von Flaschen (B) zu einer Füllstation, wobei die Flaschen jeweilige Füllöffnungen (O) und jeweilige longitudinale Achsen (A) orthogonal zu den Füllöffnungen (O) haben, wobei das Verfahren die Schritte aufweist:
- Zuführen der Flaschen (B) mit ihren longitudinalen Achsen (A) in einer Zuführrichtung (C), so dass sie mit ihren longitudinalen Achsen (A) horizontal, und mit den Füllöffnungen (O) in einer wechselseitig gleichsinnigen Art orientiert angeordnet sind;
- Aufnehmen der Flaschen (B) mittels eines Transferrades (18), welches in der Lage ist, sich um eine Achse (D) zu drehen, die bezüglich der Zuführrichtung (C) geneigt ist, wobei das Transferrad (18) eingerichtet ist zum Aufnehmen der Flaschen (B) mit den Achsen (A) horizontal und zum Freigeben der Flaschen (B) mit der Achse (A) in der vertikalen Richtung orientiert, und
- Setzen der Flaschen (B), die zu dem Transferrad zugeführt sind bei einem Abstand voneinander in der Zuführrichtung (C) um einen konstanten Pitch und angeordnet in einer Phasenbeziehung mit dem Transferrad (18).

## Revendications

1. Appareil d'alimentation d'un poste de remplissage en bouteilles (B), dans lequel lesdites bouteilles (B) présentent des ouvertures de remplissage respectives (O) et un axe longitudinal (A) orthogonal auxdites ouvertures de remplissage (O), ledit appareil comprenant :
- un convoyeur (12) prévu pour l'alimentation des bouteilles (B) dans une direction d'alimentation (C) de sorte que leur axe longitudinal (A) soit horizontal et leurs ouvertures de remplissage (O) soient orientées d'une manière mutuellement concordante ; et
- une roue de transfert (18) capable de tourner autour d'un axe (D) incliné par rapport à ladite direction d'alimentation (C) et dotée d'une pluralité de sièges de serrage (20) conçus pour prélever dudit convoyeur (12) les bouteilles (B) dont ledit axe (A) est horizontal et pour libérer les bouteilles (B) dont ledit axe (A) est orienté dans la direction verticale,
ledit appareil étant **caractérisé en ce que** ledit convoyeur (12) est adapté pour l'alimentation desdites bouteilles (B) avec leurs axes longitudinaux (A) dans la direction d'alimentation (C) et comprend un réservoir intermédiaire (14) et un convoyeur d'espacement et de mise en phase (16) conçu pour alimenter les bouteilles (B) placées à une distance les unes des autres par un écartement constant dans ladite direction d'alimentation (C) et dans un rapport de mise en phase avec ladite roue de transfert (18).

2. Appareil selon la revendication 1, **caractérisé en ce que** l'axe de rotation (D) de ladite roue (18) est incliné sensiblement à 45° par rapport à ladite direction d'alimentation (C).

3. Procédé d'alimentation d'un poste de remplissage en bouteilles (B), dans lequel lesdites bouteilles présentent des ouvertures de remplissage respectives (O) et des axes longitudinaux respectifs (A) orthogonaux auxdites ouvertures de remplissage (O), le procédé comprenant les étapes suivantes :
- alimenter lesdites bouteilles (B) avec leurs axes longitudinaux (A) dans une direction d'alimentation (C) de sorte que leur axe longitudinal (A) soit horizontal et leurs ouvertures de remplissage (O) soient orientées d'une manière mutuellement concordante ;
- prélever lesdites bouteilles (B) à l'aide d'une roue de transfert (18) qui est capable de tourner autour d'un axe (D) incliné par rapport à ladite direction d'alimentation (C), ladite roue de transfert (18) étant conçue pour prélever les bouteilles (B) dont ledit axe (A) est horizontal et pour libérer les bouteilles (B) dont ledit axe (A) est orienté dans la direction verticale, et
- placer lesdites bouteilles (B) fournies à ladite roue de transfert à une distance les unes des autres dans ladite direction d'alimentation (C) par un écartement constant et disposées dans un rapport de mise en phase avec ladite roue de transfert (18).
